# EUROPEAN PATENT APPLICATION

(11) **EP 4 512 646 A1**
(43) Date of publication of application: **26.02.2025**
(21) Application number: 24193188.0
(22) Date of filing: 06.08.2024
(51) Int. Cl.: B60K 1/00, B60K 1/04, B60K 15/05

(54) **UTILITY VEHICLE**

(30) Priority: 17.08.2023 JP 2023132988
(71) Applicant: Kubota Corporation, Osaka-shi, Osaka 556-8601 (JP)
(72) Inventor: OKAZAKI, Kazuto, SAKAI-SHI, OSAKA, 5900908 (JP); KAWABATA, Shinichi, SAKAI-SHI, OSAKA, 5900908 (JP); MIYAKE, Yuichi, SAKAI-SHI, OSAKA, 5900908 (JP); SATOZONO, Takeshi, SAKAI-SHI, OSAKA, 5900908 (JP)
(74) Representative: Cabinet Beau de Loménie

(57) **Abstract**

A utility vehicle of the present invention is configured to cause an inverter (13) to convert direct-current electric power from a battery (14) into alternating-current electric power and supply the alternating-current electric power to an electric motor (12), and is also configured to cause motive power to be transmitted from the electric motor (12) to a transmission case (11) and then from the transmission case (11) to a pair of left and right rear wheels (2). The battery (14) is below a driver's seat (5). The transmission case (11) is between the rear wheels (2). The electric motor (12) is between the rear wheels (2) and forward of the transmission case (11) relative to the body. The inverter (13) is backward of the battery (14) relative to the body, forward of the electric motor (12) relative to the body, and within the width of the battery (14).

## Description

### Technical Field

The present invention relates to a utility vehicle.

### Background Art

As disclosed in Patent Literature 1, a utility vehicle may include an electric motor (assist motor), a transmission case configured to receive motive power from the electric motor and output the motive power to a pair of left and right rear wheels, and a battery configured to feed electric power to the electric motor.

### Citation List

### Patent Literature

Patent Literature 1
Japanese Patent No. 7050421

### Summary of Invention

### Technical Problem

There has been a demand for an electrically operated utility vehicle including wheels and an electric motor configured to drive the wheels. Utility vehicles, which serve multiple purposes such as cargo transport and recreation, are driven on rough terrain. This has led to a demand for an electrically operated utility vehicle easily drivable on rough terrain.

The present invention provides an electrically operated utility vehicle easily drivable on rough terrain.

### Solution to Problem

A utility vehicle according to the present invention includes: a pair of left and right front wheels; a pair of left and right rear wheels; a driver's seat between the front wheels and the rear wheels in a plan view; an electric motor; a first battery; an inverter configured to convert direct-current electric power from the first battery into alternating-current electric power and supply the alternating-current electric power to the electric motor; and a transmission case configured to receive motive power from the electric motor and output the motive power to the rear wheels, the transmission case being between the rear wheels, the electric motor being forward of the transmission case relative to a body of the utility vehicle and between the rear wheels, the first battery being below the driver's seat, the inverter being backward of the first battery relative to the body, forward of the electric motor relative to the body, and within a width of the first battery.

The above configuration allows motive power to be transmitted from the electric motor to the transmission case and then from the transmission case to the rear wheels, meaning that the electric motor drives the rear wheels.

The above configuration allows the first battery, the inverter, the electric motor, and the transmission case to be all disposed in a space under the driver's seat and between the rear wheels. This allows the utility vehicle to have a center of gravity at a position closer than conventional to the center in the front-back and width directions of the vehicle. This stabilizes the body on rough terrain, with the result that the electrically operated utility vehicle is easily drivable on rough terrain.

Disposing the first battery, the inverter, and the electric motor closely to one another allows use of a simple and lightweight connection structure including a harness for connecting the above components and a harness holder. This reduces costs and electric power consumption.

The utility vehicle may preferably further include: an in-vehicle charger device configured to charge the first battery, wherein the in-vehicle charger device is backward of the first battery relative to the body, forward of the electric motor relative to the body, within the width of the first battery, and next to the inverter in a width direction of the body.

The above configuration allows not only the first battery, the inverter, the electric motor, and the transmission case but also the in-vehicle charger device to be all disposed in a space under the driver's seat and between the rear wheels.

The utility vehicle may preferably further include: a charger port configured to supply electric power from a power source outside the body to the in-vehicle charger device, wherein the charger port is opposite to the inverter across the in-vehicle charger device in the width direction of the body, forward of the rear wheels relative to the body, and laterally outward of the in-vehicle charger device relative to the body.

With the above configuration, the charger port is close to the in-vehicle charger device. This facilitates connecting the charger port to the in-vehicle charger device to supply electric power from the charger port to the in-vehicle charger device.

The utility vehicle may preferably be further configured such that the first battery is oriented to have a first dimension in a width direction of the body and a second dimension in a front-back direction of the body, the first dimension being larger than the second dimension.

The above configuration facilitates placing the first battery under the driver's seat in such a manner that the first battery does not protrude from the driver's seat in the front-back direction.

The utility vehicle may preferably further include: a second battery configured to output electric power with a voltage lower than a voltage of the direct-current electric power that the first battery outputs, wherein the second battery is opposite to the in-vehicle charger device across the inverter in the width direction of the body, forward of the rear wheels relative to the body, and laterally outward of the inverter relative to the body.

With the above configuration, the second battery is close to the inverter. This facilitates connecting the second battery to the inverter to supply control electric power from the second battery to the inverter.

### Brief Description of Drawings

Fig. 1 is a left side view of a utility vehicle.
Fig. 2 is a right side view of a utility vehicle.
Fig. 3 is a diagram illustrating components such as a transmission case, an electric motor, an inverter, and a first battery as viewed from above.
Fig. 4 is a diagram illustrating a transmission case, an electric motor, an inverter, and a first battery as viewed from the left side.
Fig. 5 is a diagram illustrating a transmission case and an electric motor as viewed from backward.
Fig. 6 is a diagram illustrating an inverter and an in-vehicle charger device as viewed from backward.

### Description of Embodiments

The description below deals with an example embodiment of the present invention with reference to drawings.

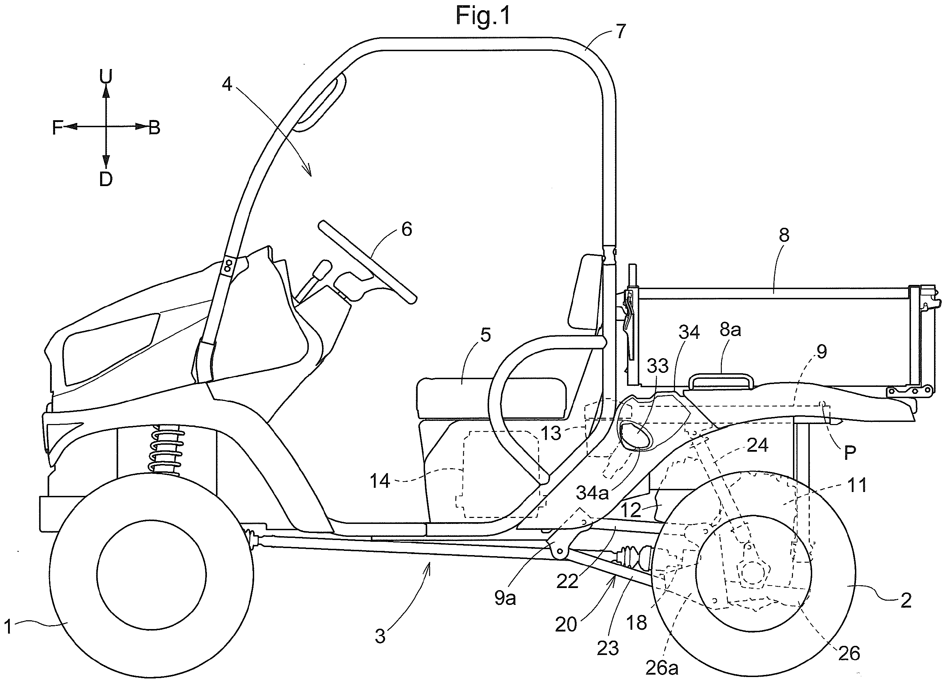

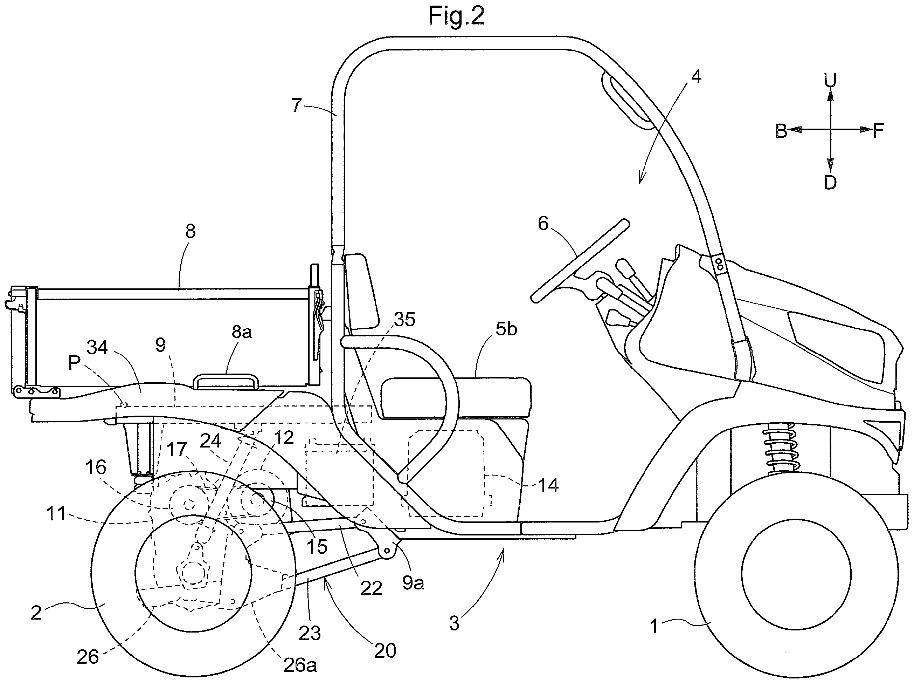

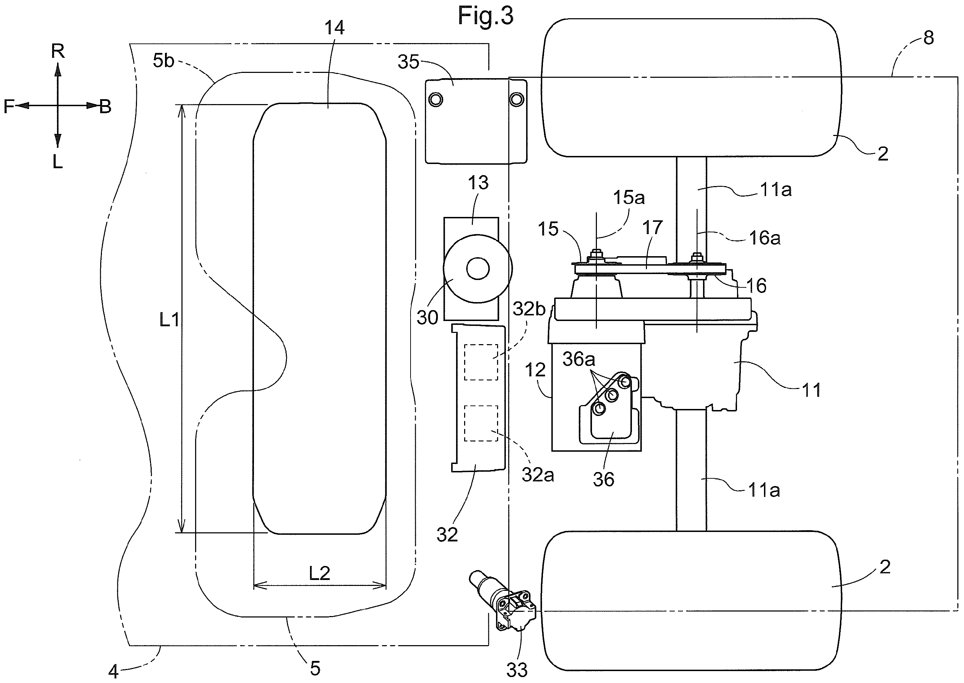

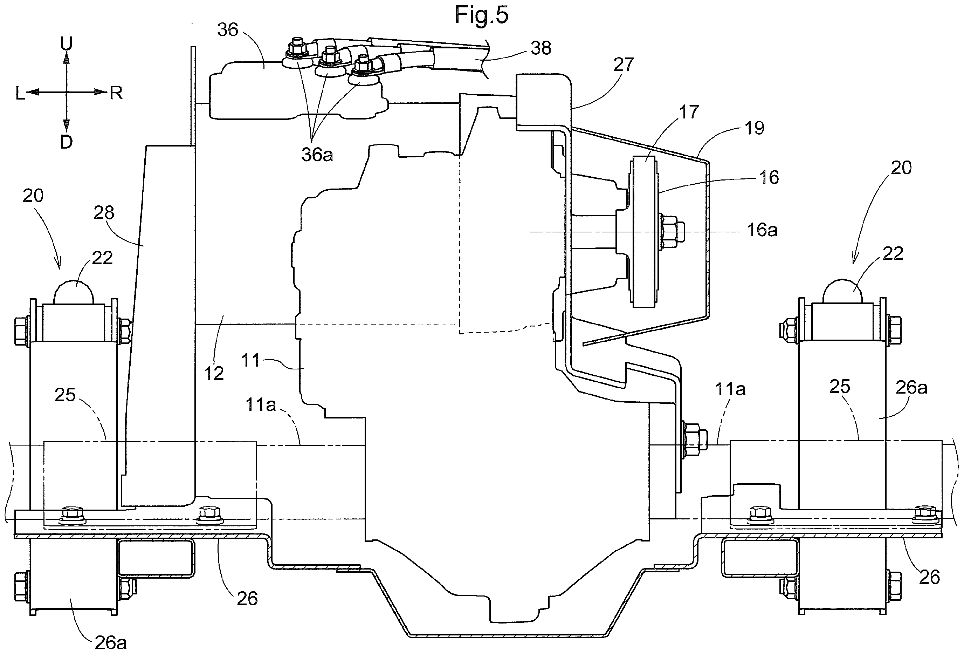

The embodiment described below is a utility vehicle including a body. Drawings such as Figs. 1 and 2 show arrow F to indicate the forward side of the body, arrow B to indicate the backward side of the body, arrow U to indicate the upward side of the body, and arrow D to indicate the downward side of the body. Drawings such as Figs. 3 and 5 show arrow L to indicate the left side of the body, which corresponds to the front side of Fig. 1 and the back side of Fig. 2. Drawings such as Figs. 3 and 5 show arrow R to indicate the right side of the body, which corresponds to the back side of Fig. 1 and the front side of Fig. 2. The left-right direction of the body corresponds to the width direction of the body.

### Overall Configuration of Utility Vehicle

Figs. 1 and 2 each illustrate a utility vehicle for multiple purposes such as cargo transport and recreation. The utility vehicle includes a pair of left and right turnable and drivable front wheels 1 as a travel device, a pair of left and right drivable rear wheels 2 as a travel device, and a body 3 provided with the front and rear wheels 1 and 2. The body 3 has a front portion provided with a driver section 4 for a driver to get in. The driver section 4 includes a driver's seat 5, a passenger's seat 5b next to the driver's seat 5, a steering wheel 6 for turning the front wheels 1, and a roll-over protective structure (ROPS) 7 that defines a driver space. The driver's seat 5 and the passenger's seat 5b are between the front wheels 1 and the rear wheels 2 in a plan view. The utility vehicle includes a cargo box 8 backward of the driver section 4 and a body frame 9 holding the cargo box 8 in such a manner that the cargo box 8 is swingable up and down about a coupling axis P for the cargo box 8 and the body frame 9. The cargo box 8 includes at opposite sides thereof two handles 8a usable to swing the cargo box 8 up into a dumping orientation and down into a travel orientation.

### Driving Front and Rear Wheels

As illustrated in Figs. 1 to 3, the body 3 is provided with a transmission case 11, an electric motor 12, an inverter 13, and a first battery 14 to drive the front and rear wheels 1 and 2. The electric motor 12 includes an output pulley 15. The transmission case 11 includes an input pulley 16. The utility vehicle includes an endless rotor 17 wound around the output and input pulleys 15 and 16. The output pulley 15 is at a side portion of the electric motor 12 which side portion is on the right side relative to the body. The output pulley 15 is rotatable about an output axis of the electric motor 12 as a rotation axis 15a which output axis extends in the width direction of the body. The input pulley 16 is backward of the output pulley 15 relative to the body. The input pulley 16 is rotatable about an input axis of the transmission case 11 as a rotation axis 16a, which is parallel to the rotation axis 15a. The utility vehicle includes a cover 19 covering the output and input pulleys 15 and 16 and the endless rotor 17 (not illustrated in Fig. 3). The endless rotor 17 is an endless rotary belt for the present embodiment, but may alternatively be an endless rotary chain.

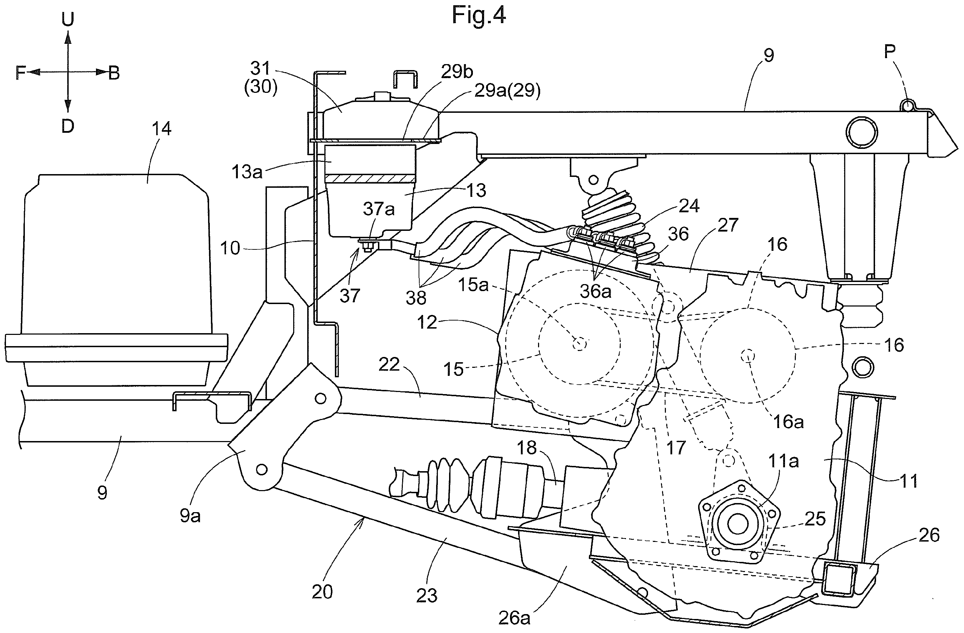

The first battery 14 feeds its direct-current electric power to the inverter 13, which then converts it into alternating-current electric power. The inverter 13 supplies the alternating-current electric power to the electric motor 12 to drive the electric motor 12. The electric motor 12 transmits its motive power from the output pulley 15 through the endless rotor 17 to the input pulley 16 to be inputted into the transmission case 11 and varied by a transmission (not illustrated in the drawings) in the transmission case 11. The transmission outputs the varied motive power from a rear-wheel differential mechanism (not illustrated in the drawings) in the transmission case 11 to the rear wheels 2 and from a front output shaft 18 (see Figs. 1 and 4) at a front portion of the transmission case 11 to the front wheels 1.

The transmission case 11 is, as illustrated in Figs. 1 to 3, below the cargo box 8 and between the rear wheels 2. The utility vehicle includes left and right suspension mechanisms 20 (see Figs. 4 and 5) extending from respective left and right lateral side portions of the transmission case 11 to the body frame 9. The transmission case 11 is held by the body frame 9 with the suspension mechanisms 20 in-between.

As illustrated in Figs. 1, 2, 4, and 5, the suspension mechanisms 20 each include an upper arm 22, a lower arm 23, and a cushion device 24. The upper and lower arms 22 and 23 are below a back portion of the driver section 4, extend backward from a front holder 9a of the body frame 9, and are swingable up and down. The cushion device 24 is below the cargo box 8, has an upper end coupled to the body frame 9, and includes a shock absorber and a coil spring. The utility vehicle includes left and right coupler members 25 and left and right rear-wheel support members 26. The transmission case 11, as illustrated in Fig. 5, includes left and right rear axle cases 11a protruding on respective left and right lateral sides toward the respective rear wheels 2 and coupled to the respective rear-wheel support members 26 with use of the respective coupler members 25 to be held by the respective rear-wheel support members 26. The rear-wheel support members 26 are provided with respective rear holders 26a. The upper and lower arms 22 and 23 have respective back ends coupled to the respective rear holders 26a and are coupled to the transmission case 11 with use of the rear holders 26a and the rear-wheel support members 26. The cushion devices 24 have respective lower ends coupled to the respective rear axle cases 11a of the transmission case 11.

The first battery 14 is, as illustrated in Figs. 1 to 3, in the space under the driver's seat 5 and the passenger's seat 5a, which is next to the driver's seat 5. The first battery 14 is oriented to have a first dimension L1 in the width direction of the body and a second dimension L2 in the front-back direction of the body, the first dimension L1 being larger than the second dimension L2.

As illustrated in Figs. 1 to 3, the electric motor 12 is under the cargo box 8.
The electric motor 12 is, as illustrated in Figs. 1, 3, and 4, backward of the first battery 14 relative to the body, forward of the transmission case 11 relative to the body, and between the rear wheels 2. The utility vehicle includes a first stay 27 extending from the transmission case 11 and a second stay 28 standing on a rear-wheel support member 26. As illustrated in Figs. 3 to 5, the electric motor 12 has a first end and a second end in the width direction of the body, the first and second ends being attached to the first and second stays 27 and 28, respectively. The electric motor 12 is held by the rear-wheel support members 26 with the first and second stays 27 and 28 and the transmission case 11 in-between.

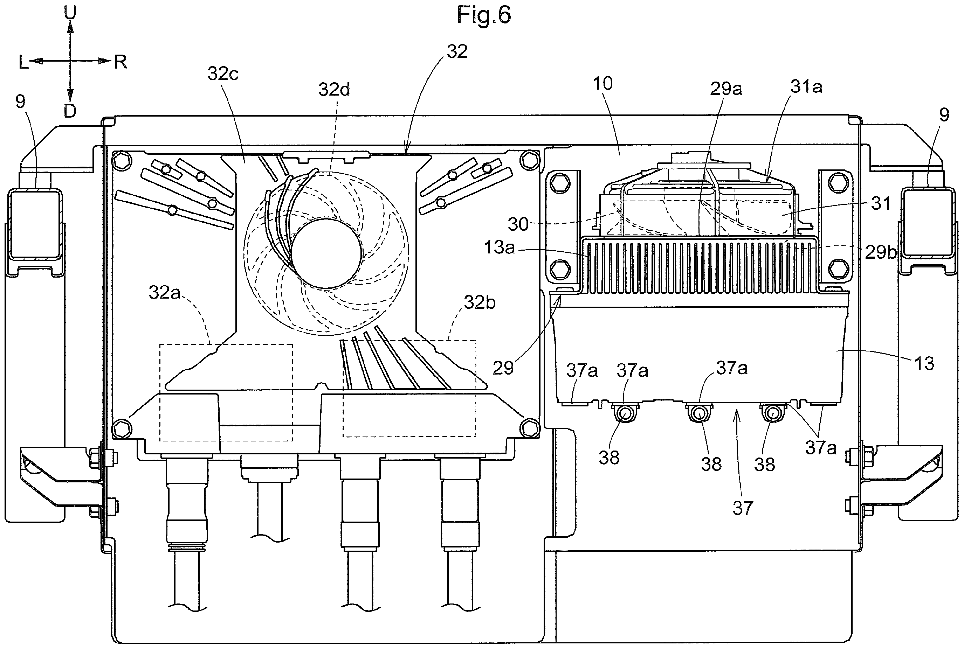

As illustrated in Figs. 1, 3, and 4, the inverter 13 is backward of the first battery 14 relative to the body, forward of the electric motor 12 relative to the body, and within the width of the first battery 14. The utility vehicle includes a partition plate 10 and an inverter holder 29 extending backward from the partition plate 10. The inverter 13 is, as illustrated in Fig. 6, attached to the inverter holder 29. The partition plate 10 is held by the body frame 9 and separates the driver space of the driver section 4 from the space under the cargo box 8. The inverter 13 is held by the body frame 9 with the inverter holder 29 and the partition plate 10 in-between.

As illustrated in Figs. 4 and 6, the utility vehicle includes a cooling fan 30 above the inverter 13. The inverter holder 29 includes a top plate 29a holding a fan case 31. The cooling fan 30 is rotatably held in the fan case 31. The cooling fan 30 is configured to draw air from outside the fan case 31 through an air intake opening 31a in the fan case 31 into the fan case 31 to generate cooling air and supply the cooling air through a through hole 29b in the top plate 29a to heat dissipating fins 13a at an upper portion of the inverter 13 to cool the heat dissipating fins 13a. The cooling fan 30 cools the heat dissipating fins 13a to cool the inverter 13.

As illustrated in Fig. 3, the utility vehicle includes an in-vehicle charger device 32 backward of the first battery 14 relative to the body, forward of the electric motor 12 relative to the body, and within the width of the first battery 14. The in-vehicle charger device 32 is, as illustrated in Figs. 3 and 6, next to the inverter 13 in the width direction of the body. The in-vehicle charger device 32 includes an in-vehicle charger 32a, a DC-to-DC converter 32b, and a charger case 32c containing the in-vehicle charger 32a and the DC-to-DC converter 32b. The charger case 32c includes a cooling fan 32d configured to blow cooling air to the in-vehicle charger 32a and the DC-to-DC converter 32b.

As illustrated in Fig. 3, the utility vehicle includes a charger port 33 opposite to the inverter 13 across the in-vehicle charger device 32 in the width direction of the body, forward of the rear wheels 2 relative to the body, and laterally outward of the in-vehicle charger device 32 relative to the body. The charger port 33 is, as illustrated in Fig. 1, held by a holder 34a included in a rear-wheel fender 3.

Connecting a charger cord from a power source outside the body such as a charger stand to the charger port 33 allows electric power to be supplied from the power source through the charger port 33 to the in-vehicle charger 32a, which then charges the first battery 14. The in-vehicle charger 32a also supplies the electric power to the DC-to-DC converter 32b for voltage adjustment. The DC-to-DC converter 32b then supplies the resulting electric power to a second battery 35 (described below).

As illustrated in Figs. 2 and 3, the utility vehicle includes a second battery 35 opposite to the in-vehicle charger device 32 across the inverter 13 in the width direction of the body, forward of the rear wheels 2 relative to the body, and laterally outward of the inverter 13. The second battery 35 is configured to output electric power for operation control or the like which electric power has a voltage lower than that of electric power that the first battery 14 outputs.

### Electric Motor and Inverter

As illustrated in Figs. 3 to 6, the electric motor 12 is provided with a terminal section 36 on an outer surface, whereas the inverter 13 is provided with an inverter terminal section 37 on an outer surface. The terminal section 36 includes a plurality of motor terminals 36a, whereas the inverter terminal section 37 includes a plurality of inverter terminals 37a. The motor terminals 36a are each connected to a predetermined one of the inverter terminals 37a with use of a harness 38, so that the electric motor 12 is connected to the inverter 13. The terminal section 36 for the present embodiment is an example including a terminal block on which the motor terminals 36a are arranged. The terminal section 36 may alternatively omit the terminal block.

The electric motor 12 is, as illustrated in Figs. 3 and 4, held by the rear-wheel support members 26 in such an orientation that the terminal section 36 is inclined on a portion of the outer surface which portion faces upward relative to the body.

Specifically, the electric motor 12 is rotated about the rotation axis 15a of the output pulley 15 as the output axis of the electric motor 12. In response to the electric motor 12 being rotated into such an orientation that the terminal section 36 (which is on a portion of the outer surface of the electric motor 12 which portion faces upward relative to the body) is inclined to have a lowered back portion, the electric motor 12 is attached to the first and second stays 27 and 28 in this orientation. This allows the electric motor 12 to be held by the rear-wheel support members 26 in such an orientation that the terminal section 36 (which is on a portion of the outer surface which portion faces upward relative to the body) is inclined to have a lowered back portion. The terminal section 36 is inclined to have a lowered back portion as viewed along the rotation axis 15a of the output pulley 15,
which extends in the width direction of the body for the present embodiment. The terminal section 36 is inclined to have a lowered back portion for the present embodiment, but may alternatively be inclined to have a lowered front portion in accordance with the rotation direction of the electric motor 12.

As illustrated in Figs. 1 and 2, the electric motor 12 is under the cargo box 8. Swinging the cargo box 8 into the dumping orientation creates a large space available for maintenance work above the terminal section 36 to facilitate the work. The inclination of the terminal section 36 allows rain water or car washing water thereon to easily flow along and drop from the terminal section 36.

As illustrated in Figs. 4 and 6, the inverter 13 is attached to the inverter holder 29 in such an orientation that the inverter terminal section 37 is on a portion of the outer surface which portion faces downward relative to the body. The inverter 13 is, in other words, held by the body frame 9 in the above orientation. This prevents rain water or car washing water falling from above onto the inverter 13 from easily reaching and wetting the inverter terminal section 37.

### Alternative Embodiments

(1) The embodiment described above is an example in which the in-vehicle charger device 32 includes both an in-vehicle charger 32a and a DC-to-DC converter 32b. The present invention is, however, not limited to such a configuration, and may alternatively be configured such that the in-vehicle charger 32a and the DC-to-DC converter 32b are not included in the in-vehicle charger device 32 and are separate from each other.
(2) The embodiment described above is an example in which the front wheels 1 are drivable. The front wheels 1 may alternatively be not drivable.
(3) The embodiment described above is an example including an in-vehicle charger device 32. The present invention may, however, omit the in-vehicle charger device 32.
(4) The embodiment described above is an example including a second battery 35 opposite to the in-vehicle charger device 32 across the inverter 13 in the width direction of the body, forward of the rear wheels 2 relative to the body, and laterally outward of the inverter 13. The present invention is, however, not limited to such a configuration, and may alternatively include a second battery 35 at any other position.
(5) The embodiment described above is an example in which the first battery 14 is oriented to have a first dimension in the width direction of the body and a second dimension in the front-back direction of the body, the first dimension being larger than the second dimension. The present invention is, however, not limited to such a configuration. The first battery 14 may be oriented in any manner.
(6) The embodiment described above is an example in which the electric motor 12 is oriented such that the terminal section 36 is inclined on a portion of the outer surface which portion faces upward relative to the body. The electric motor 12 may, however, be oriented in any manner, for instance, such that the terminal section 36 is horizontal on a portion of the outer surface which portion faces downward relative to the body.
(7) The embodiment described above is an example in which the respective rotation axes 15a and 16a of the output and input pulleys 15 and 16 extend in the width direction of the body. The rotation axes 15a and 16a may, however, alternatively extend in the front-back direction of the body.
(8) The embodiment described above is an example in which the cargo box 8 is movable into a dumping orientation. The cargo box 8 may, however, alternatively be unmovable into a dumping orientation.
(9) The embodiment described above is an example in which the inverter 13 is oriented such that the inverter terminal section 37 is on a portion of the outer surface which portion faces downward relative to the body. The present invention is, however, not limited to such a configuration. The inverter terminal section 37 may be at any position, for instance, on a portion of the outer surface which portion faces upward relative to the body.

### Industrial Applicability

The present invention is applicable to any utility vehicle including a pair of left and right front wheels and a pair of left and right rear wheels.

### Reference Signs List

- 1: Front wheel
- 2: Rear wheel
- 5: Driver's seat
- 11: Transmission case
- 12: Electric motor
- 13: Inverter
- 14: First battery
- 32: In-vehicle charger device
- 33: Charger port
- 35: Second battery
- L1: Dimension in the width direction of the body
- L2: Dimension in the front-back direction of the body

## Claims

1. A utility vehicle, comprising:
a pair of left and right front wheels (1);
a pair of left and right rear wheels (2);
a driver's seat (5) between the front wheels (1) and the rear wheels (2) in a plan view;
an electric motor (12);
a first battery (14);
an inverter (13) configured to convert direct-current electric power from the first battery (14) into alternating-current electric power and supply the alternating-current electric power to the electric motor (12); and
a transmission case (11) configured to receive motive power from the electric motor (12) and output the motive power to the rear wheels (2),
the transmission case (11) being between the rear wheels (2),
the electric motor (12) being forward of the transmission case (11) relative to a body of the utility vehicle and between the rear wheels (2),
the first battery (14) being below the driver's seat (5),
the inverter (13) being backward of the first battery (14) relative to the body, forward of the electric motor (12) relative to the body, and within a width of the first battery (14).

2. The utility vehicle according to claim 1, further comprising:
an in-vehicle charger device (32) configured to charge the first battery (14),
wherein the in-vehicle charger device (32) is backward of the first battery (14) relative to the body, forward of the electric motor (12) relative to the body, within the width of the first battery (14), and next to the inverter (13) in a width direction of the body.

3. The utility vehicle according to claim 2, further comprising:
a charger port (33) configured to supply electric power from a power source outside the body to the in-vehicle charger device (32),
wherein the charger port (33) is opposite to the inverter (13) across the in-vehicle charger device (32) in the width direction of the body, forward of the rear wheels (2) relative to the body, and laterally outward of the in-vehicle charger device (32) relative to the body.

4. The utility vehicle according to any one of claims 1 to 3, wherein
the first battery (14) is oriented to have a first dimension (L1) in a width direction of the body and a second dimension (L2) in a front-back direction of the body, the first dimension (L1) being larger than the second dimension (L2).

5. The utility vehicle according to claim 2 or claim 3, or according to claim 4 taken in combination with claim 2, further comprising:
a second battery (35) configured to output electric power with a voltage lower than a voltage of the direct-current electric power that the first battery (14) outputs,
wherein the second battery (35) is opposite to the in-vehicle charger device (32) across the inverter (13) in the width direction of the body, forward of the rear wheels (2) relative to the body, and laterally outward of the inverter (13) relative to the body.
